# EUROPEAN PATENT SPECIFICATION

(11) **EP 0 774 079 B1**
(45) Date of publication and mention of the grant of the patent: **10.06.1998**
(21) Application number: 94900783.5
(22) Date of filing: 29.11.1993
(51) Int. Cl.: F16C 5/00, F02B 75/32

(54) **A PISTON ENGINE OF THE CROSSHEAD TYPE**
HUBKOLBENMOTOR MIT KREUZKOPF
MOTEUR A PISTON DU TYPE A CROSSE

(30) Priority: 09.12.1992 DK 147992
(43) Date of publication of application: 21.05.1997
(73) Proprietor: MAN B&W DIESEL A/S, 2450 Copenhagen SV (DK)
(72) Inventor: KNUDSEN, Thomas, Synnestvedt, DK-3520 Farum (DK)
(74) Representative: Indahl, Peter Jensen
(86) International application number: DK9300387
(87) International publication number: WO9413966

(56) References cited:
- DE-A- 4 003 468
- DE-C- 767 156
- US-A- 4 338 892

## Description

A piston engine of the crosshead type, particularly a large two-stroke engine, having pistons each of which is connected with an associated crank pin journal on the crankshaft via a piston rod, a crosshead, and a connecting rod, wherein the crosshead has a crosshead pin having two guide shoes positioned at opposite ends of the pin and movable along guide planes supported by upright transverse stiffening in the engine frame box.

Such an engine is well-known in the art as an in-line engine and is typically used as a propulsion engine in a ship or as a stationary power-producing engine. In the transverse direction of the engine, the crosshead is guided by guide planes fixed to the transverse stiffening of the engine frame box and extending throughout the major part of the height of the frame box in order to be effective over the full stroke of the engine. For absorption of the relatively large transversal forces affecting the crosshead, the guide planes have to be securely fastened in the stiffening. It is known that the transverse stiffening may be constructed as a multi-layer plate structure or as a single-layer plate wall. The prior-art engine has the disadvantage that it is very long.

In a multi-cylindered trunk engine it is known to reduce the length of the engine by arranging the cylinders in two parallel rows which may either be associated with respective crankshafts or supply their driving power to a common crankshaft. The latter case is known from for example 4-stroke trunk engines where the connecting rods may be arranged side by side on a common crank pin journal.

A small V-engine is also known having an air pump piston arranged below each working cylinder in such a manner that the pump piston forms a connection between the piston rod and the connecting rod of the working cylinder. The air pump piston here acts as a sort of crosshead, but is only able to absorb relatively limited transversal forces as the pump cylinder is fastened in a horizontally positioned stiffener in the engine block. If this pump cylinder is exposed to large transversal forces, or if the stroke of the engine is increased, the pump cylinder will twist itself in relation to the horizontal stiffener during the running of the engine, whereby the two cylinders can no longer maintain the required coaxiality.

It is an object of the invention to provide a piston engine of the type mentioned above, which provides a secure control of the crosshead even at the production of large outputs and where at the same time the engine is of a small length in relation to the number of cylinders.

With this object in view, the engine is characterized in that its cylinders are arranged in two parallel rows, that the connecting rods of two neighbouring cylinders, one in each row are journalled side by side on a common crank pin journal, and that the crosshead pin and the guide planes are designed so that the crosshead bearings in the associated pair of neighbouring cylinders are displaced in relation to each other in the longitudinal direction of the engine so that the central axes of the piston rod and the connecting rod associated with the same cylinder are positioned substantially in a common plane.

The arrangement of the cylinders in two rows has the effect that the engine has a small length in relation to its output. The design of the connecting rods is kept simple in that they are journalled side by side on a common journal. The mutual displacement of the crossheads associated with the connecting rods arranged on the same journal has the effect that the transmission of force from the pistons to the crankshaft takes place in a plane perpendicular to the axis of rotation of the crankshaft despite the side-by-side arrangement of the connecting rods, which is of great importance to prevent the occurrence of moments acting in the longitudinal direction of the engine.

In a first preferred embodiment, the crosshead bearing is arranged asymmetrically in the longitudinal direction of the engine on the crosshead pin. This asymmetrical position of the crosshead bearing compensates for the mutual displacement of the bearings, so that it is not necessary to take special precautions when fastening the guide planes on the upright transverse stiffening.

Preferably, the asymmetrical position of the bearing on the pin is utilized to design the engine frame box so that the guide plane supporting transverse stiffenings which are preferably designed as single-layer plate walls, are each positioned in the same transverse plane along the full width of the engine. Thus, the stiffenings provide the engine frame box with a great rigidity in the transverse direction, which counteracts vibrations in the frame box and reduces deformations of the individual frame box elements. The rigidity of the transverse stiffenings also results in a secure positioning of the guide planes in a position with mutually parallel sliding surfaces, which reduces the risk of wear both on the guide planes and the crosshead shoes.

The asymmetrical position of the crosshead bearing on the pin has the result that the two associated crosshead shoes do not have to absorb equally large loads, and this may suitably be utilized for a reduction of the size of one guide shoe, viz. so that the width of the bearing faces on the guide shoe furthest away from the crosshead bearing, and preferably also the width of the bearing faces on the associated guide planes, is smaller than the width of the bearing faces of the guide shoe, and preferably also of the guide planes, at the opposite end of the pin.

By adapting the guide shoes in relation to each other so that the ratio between the widths of the bearing faces positioned at either end of the crosshead pin is inversely proportional to their distance from the centre of the crosshead bearing, it is possible to obtain the result that the bearing faces are exposed to a largely uniform load and thus uniform wear. This optimum use of the material in the crosshead with associated supports results in an engine with an advantageously low weight.

Another preferred embodiment compensates for the mutual displacement of the crosshead bearings in that the crosshead bearing with associated pin and guide shoes is substantially symmetrical about a transverse median plane through the crosshead bearing, and that the guide planes for the associated pairs of neighbouring cylinders are displaced in relation to each other in the longitudinal direction of the engine. This allows for the use of a conventionally designed crosshead in an engine where the crossheads are offset in relation to each other. At the same time the guide planes have been ensured a substantially uniform load. With this conventional design of the crosshead, there are two different possibilities for the mounting of the guide planes on the upright stiffening of the engine frame box. The first solution is distinguished by giving the frame box great rigidity, as the guide plane supporting transverse stiffenings of the engine frame box, which are preferably designed as single-layer plate walls, are each positioned in the same transverse plane over the full width of the engine, and the mutual displacement of the crossheads is in that case absorbed by one set of guide planes for a crosshead pin being positioned at a larger distance from the associated transverse stiffening than the other set.

Alternatively, the engine may be designed so that the guide plane supporting transverse stiffening associated with one of two neighbouring cylinders in the associated pair, is displaced in the longitudinal direction of the engine in relation to the transverse stiffening associated with the other neighbouring cylinder, preferably so that the two sets of guide planes for a crosshead pin are mutually symmetrical about the transverse median plane through the crosshead bearing. As the transverse stiffening here absorbs the displacement between the crossheads, the crosshead with the associated guide planes may be designed in a completely conventional manner.

Preferably, the displacement between the crossheads in the associated set of neighbouring cylinders is from 5 to 20 per cent of the length of the crosshead pin, and preferably 15 per cent thereof. The lower limit for the displacement results in an engine of short length, but then the crank pin journal must have a large diameter and/or be formed from a specially-made bearing material to be able to transfer the driving forces in the connecting rod to the crankshaft. The upper limit of 20 per cent renders it possible to design the connecting rod bearing with a large width, which results in a large bearing area and thus a small load on the bearing, but the engine will then be somewhat longer, and at the same time the crosshead pin and/or the transverse stiffening and the guide planes have to absorb a relatively large displacement. With a displacement of 15 per cent a suitable compromise is obtained between the load on the connecting rod bearing and the design of the engine structure around the crosshead.

Examples of embodiments of the invention will now be described in further detail below with reference to the schematic drawing, in which

Fig. 1 shows a partial cross-sectional view through an engine according to the invention,

Figs. 2 and 3 show plan views of two different arrangements of the first preferred embodiment, and

Fig. 4 is a corresponding view of the second preferred embodiment.

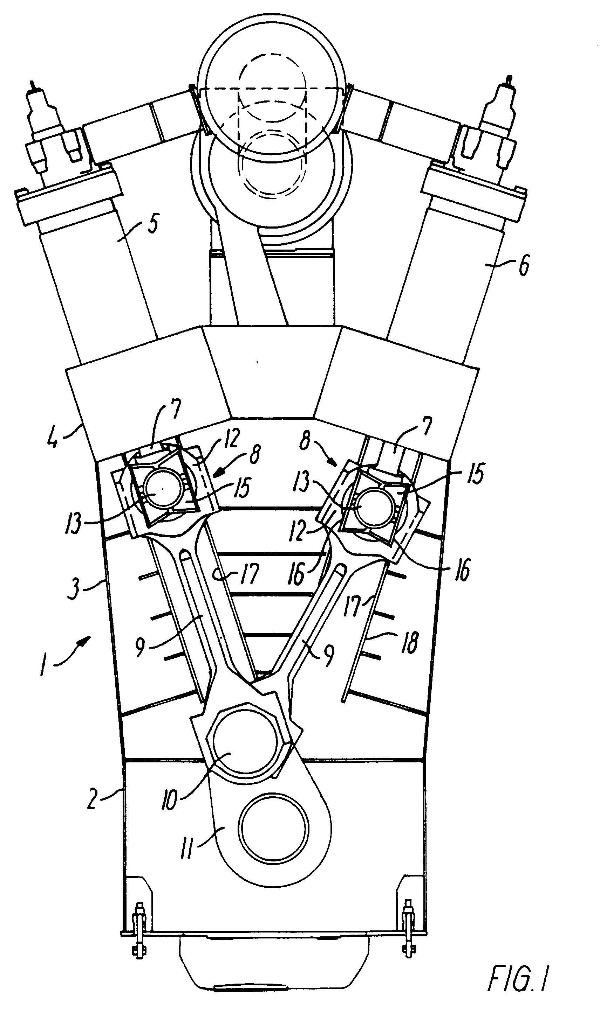

Fig. 1 shows a two-stroke, long-stroke crosshead engine generally designated 1 with a frame box 3 mounted on a bedplate 2 and carrying two rows of neighbouring cylinders 5, 6 at its upper side in a cylinder section 4, which cylinders are mounted in pairs in V-shape on the engine frame box. Via respective piston rods 7 with associated crossheads generally designated 8, and connecting rods 9, the pistons of each pair of neighbouring cylinders are connected with a common crank pin journal 10 on a crankshaft 11. The two connecting rods 9 are journalled side by side on the common journal as shown.

The crosshead 8 has a crosshead bearing 12 rigidly connected with the connecting rod, and a crosshead pin 13 which is journalled in the bearing and to which the piston rod is fastened by means of bolts screwed into threaded holes 14 at the upper side of the pin.

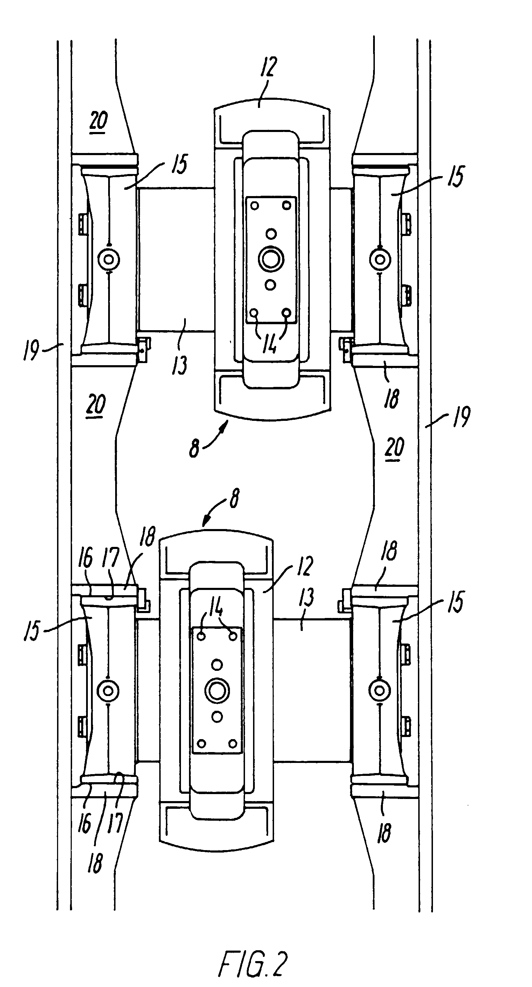

In a manner known per se, the crosshead pin is journalled in two guide shoes 15 each having two parallel bearing faces 16 extending at right angles to a transverse plane through the engine and guided in the transverse direction of the engine by means of bearing faces 17 on associated guide planes 18 (see Fig. 2).

The guide planes extend throughout the major part of the distance between the bedplate 2 and the cylinder section 4. In order to be able to transfer the relatively large transversal forces to the engine frame box without the guide planes being deformed so that the associated bearing faces 16 and 17 are worn dissimilarly, they are welded over their full height onto an associated transverse wall 19, and at their back they are also braced at regular intervals by plate sections 20 giving the guide planes a good stability. In the embodiment shown in Fig. 2, the transverse walls 19, the guide planes 18, the plate sections 20 and the crosshead pin with associated guide shoes 15 are mirrored about the median line between the two transverse walls. The transverse walls 19 constituting the transverse stiffening of the engine frame box extend in an unbroken line and in the same plane over the full width of the frame box. The crosshead bearings 12 are asymmetrically journalled on respective pins 13 so that the connecting rod bearings may be positioned side by side on the common journal.

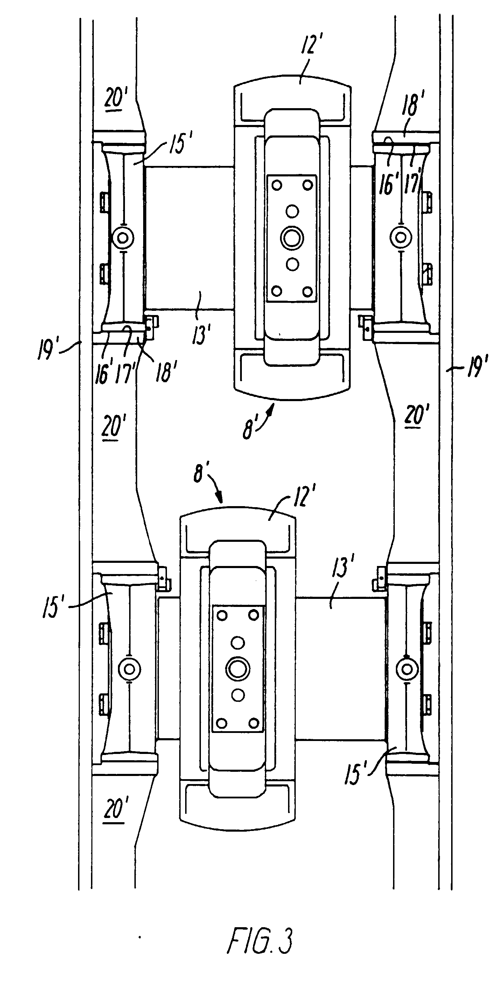

In the alternative arrangement shown in Fig. 3, members having the same function as in Fig. 1 have the same reference numeral provided with a mark. The bearing faces 16', 17' on the guide shoe and the guide plane furthest away from the crosshead bearing 12' have a smaller width in the longitudinal direction of the engine than the corresponding bearing faces at the other end of the pin, which compensates for the difference in load on the two guide shoes 15', so that the load on the bearing faces 16', 17' becomes more uniform.

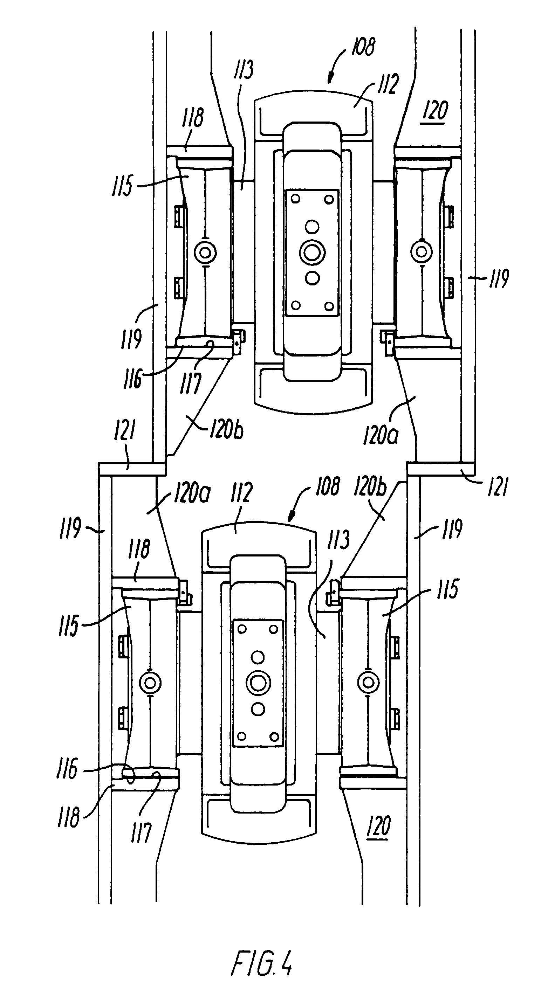

In the second preferred embodiment shown in Fig. 4, members having the same function as in Fig. 1 have reference numerals larger by one hundred than the numerals of Fig. 1. The transverse walls 119 associated with each pair of neighbouring cylinders are offset in relation to each other in the longitudinal direction of the engine so that the offset between the two conventionally designed crossheads 108 is absorbed in the transverse stiffening. At about the middle of the engine, a connecting portion 121 interconnects the two halves of the transverse walls in order to increase the transverse rigidity of the engine frame box. If necessary, the transverse rigidity may be further increased by forming the plate sections 120a, 120b extending to the connecting portion 121 as a continuous plate section with a height which makes it project a suitable distance in the direction of the opposite transverse wall 119.

The alternative arrangement of the second embodiment is not shown in the drawing, but as mentioned, it has transverse walls of the kind shown in Figs. 2 and 3. One set of guide planes for each crosshead pin has bearing faces positioned at a longer distance from the transverse wall than the bearing faces of the opposite set of guide planes. The offset set of guide planes with the associated stiffening plate sections is designed with a larger width in the longitudinal direction of the engine so that they may be welded on to transverse walls in a conventional manner.

For the sake of clarity, Figs. 2-4 only show one pair of crossheads, but it is obvious that the crossheads with associated structure are positioned on both sides of the internal transverse walls in the engine frame box.

## Claims

1. A piston engine of the crosshead type, particularly a large two-stroke engine, having pistons which are each connected with an associated crank pin journal (10) on the crankshaft (11) via a piston rod (7), a crosshead (8; 8'; 108), and a connecting rod (9), wherein the crosshead has a crosshead pin (13; 13'; 113) having two guide shoes (15; 15'; 115) positioned at opposite ends of the pin and movable along guide planes (18; 18'; 118) supported by an upright transverse stiffening (19; 19'; 119) in the engine frame box (3),
**characterized** in that the cylinders of the engine are arranged in two parallel rows, that the connecting rods of two neighbouring cylinders (5, 6), one in each row are journalled side by side on a common crank pin journal (10), and that the crosshead pin (13; 13'; 113) and the guide planes (18; 18'; 118) are designed so that the crosshead bearings in the associated pair of neighbouring cylinders are displaced in relation to each other in the longitudinal direction of the engine so that the central axes of the piston rod (7) and the connecting rod (9) associated with the same cylinder are positioned substantially in a common plane.

2. A piston engine according to claim 1,
**characterized** in that the crosshead bearing (12; 12') is arranged asymmetrically in the longitudinal direction of the engine on the crosshead pin (13; 13').

3. A piston engine according to claim 2,
**characterized** in that the guide plane supporting transverse stiffenings of the engine frame box (3), which are preferably designed as single-layer plate walls (19; 19'), are each arranged in the same transverse plane along the full width of the engine.

4. A piston engine according to either one of claims 2 or 3, **characterized** in that the width of the bearing faces (16') on the guide shoe (15') furthest away from the crosshead bearing (12') and preferably also the width of the bearing faces (17') on the associated guide planes (18') is smaller than the width of the bearing faces on the guide shoe, and preferably also of the guide planes, at the opposite end of the pin.

5. A piston engine according to claim 4,
**characterized** in that the ratio between the widths of the bearing faces (16', 17') positioned at either end of the crosshead pin (13') is inversely proportional to their distance from the centre of the crosshead bearing (12').

6. A piston engine according to claim 1,
**characterized** in that the crosshead bearing (112) with associated pin (113) and guide shoes (115) is substantially symmetrical about a transverse median plane through the crosshead bearing, and that the guide planes (118) for the associated pair of neighbouring cylinders are displaced in relation to each other in the longitudinal direction of the engine.

7. A piston engine according to claim 6,
**characterized** in that the guide plane supporting transverse stiffenings of the engine frame box, which are preferably designed as single-layer plate walls, are each positioned in the same transverse plane along the full width of the engine (1), and that one set of guide planes for a crosshead pin is positioned at a larger distance from the associated transverse stiffenings than the other set.

8. A piston engine according to claim 6,
**characterized** in that the guide plane supporting transverse stiffening (119) associated with one of two neighbouring cylinders (5, 6) in the associated pair, is displaced in the longitudinal direction of the engine in relation to the transverse stiffening (119) associated with the other neighbouring cylinder, preferably so that the two sets of guide planes for a crosshead pin (113) are mutually symmetrical about the transverse median plane through the crosshead bearing.

9. A piston engine according to any one of claims 1-7, **characterized** in that the displacement between the crossheads in the associated pair of neighbouring cylinders (5, 6) is from 5 to 20 per cent of the length of the crosshead pin, preferably 15 per cent.

## Patentansprüche

1. Kreuzkopf-Hubkolben-Motor, insbesondere Zweitakt-Großmotor, dessen Kolben jeweils über eine Kolbenstange (7), einen Kreuzkopf (8,8'108) und eine Pleuelstange (9) mit einem zugeordneten Kurbellagerzapfen (10) der Kurbelwelle (11) verbunden sind, wobei der Kreuzkopf einen Kreuzkopfzapfen (13,13'1013) aufweist, der mit zwei an seinen einander gegenüberliegenden Enden angeordneten Führungsschuhen (15,15'115) versehen ist, die an Führungen (18,18',118) entlang bewegbar sind, welche an stehend im Motorgehäuse (3) vorgesehenen Querversteifungen (19,19'119) aufgenommen sind, **dadurch gekennzeichnet**, daß die Zylinder des Hubkolben-Motors in zwei parallelen Reihen angeordnet sind, daß die Pleuelstangen von zwei einander benachbarten Zylindern, die jeweils unterschiedlichen Reihen angehören, Seite an Seite nebeneinander auf einem gemeinsamen Kurbellagerzapfen (10) gelagert sind und daß der Kreuzkopfzapfen (13,13'113) und die Führungen (18,18'118) so ausgebildet sind, daß die zu jeweils einem zugeordneten Paar einander benachbarter Zylinder gehörenden Kreuzkopflager in Motorlängsrichtung so gegeneinander versetzt sind, daß die Längsachsen einer jeweils demselben Zylinder zugeordneten Kolbenstange (7) und Pleuelstange (9) im Wesentlichen in einer gemeinsamen Ebene angeordnet sind.

2. Hubkolben-Motor nach Anspruch 1, **dadurch gekennzeichnet**, daß das Kreuzkopflager (12,12) in Motorlängsrichtung asymmetrisch auf dem Kreuzkopfzapfen (13,13') angeordnet ist.

3. Hubkolben-Motor nach Anspruch 2, **dadurch gekennzeichnet**, daß jede der die Führungen tragenden, vorzugsweise jeweils als einwandige Wandplatte (19,19') ausgebildeten Querversteifungen des Motorgehäuses (3) über die ganze Motorbreite in ein und derselben Querebene verläuft.

4. Hubkolben-Motor nach einem der Ansprüche 2 oder 3, **dadurch gekennzeichnet**, daß die Breite der Lagerflächen (16') des jeweils vom Kreuzkopflager (12') am weitesten entfernten Führungsschuhs (15') und vorzugsweise auch die Breite der Lagerflächen (17') der jeweils zugeordneten Führungen (18) kleiner als die Breite der Lagerflächen des am entgegengesetzten Ende des Kreuzkopfzapfens vorgesehenen Führungsschuhs und vorzugsweise auch der zugeordneten Führungen ist.

5. Hubkolben-Motor nach Anspruch 4, **dadurch gekennzeichnet**, daß das Verhältnis der Breiten der im Bereich der einander gegenüberliegenden Enden des Kreuzkopfzapfens (13') vorgesehenen Lagerflächen (16',17') umgekehrt proportional zu ihrem Abstand von der Mitte des Kreuzkopflagers (12') ist.

6. Hubkolben-Motor nach Anspruch 1, **dadurch gekennzeichnet**, daß das Kreuzkopflager (112) mit zugeordnetem Kreuzkopfzapen (113) und zugeordneten Führungsschuhen (115) im Wesentlichen symmetrisch zu einer Mittelquerebene durch das Kreuzkopflager ist und daß die jeweils zu einem Paar einander benachbarter Zylinder gehörenden Führungen (118) in Motorlängsrichtung gegeneinander versetzt sind.

7. Hubkolben-Motor nach Anspruch 6, **dadurch gekennzeichnet**, daß die die Führungen tragenden, vorzugsweise als einwandige Wandplatten ausgebildeten Querversteifungen des Motorgehäuses jeweils über der ganzen Breite des Motors in einer Ebene verlaufen und daß die einerseits vorgesehenen, einem Kreuzkopfzapfen zugeordneten Führungen von der jeweils zugeordneten Querversteifung einen größeren Abstand aufweisen, als die jeweils andererseits vorgesehenen Führungen.

8. Hubkoben-Motor nach Anspruch 6, **dadurch gekennzeichnet**, daß die mit Führungen versehene, jeweils einem Zylinder eines zusammengehörenden Paars einander benachbarter Zylinder (5,6) zugeordnete Querversteifung (119) gegenüber der dem jeweils anderen Zylinder des Zylinderpaars zugeordneten Querversteifung (119) in Motorlängsrichtung versetzt ist, vorzugsweise so, daß die beiden, den Enden eines Kreuzkopfzapfens (113) jeweils zugeordneten Führungsanordnungen bezüglich der Mittelquerebene durch das Kreuzkopflager symmetrisch zueinander sind.

9. Hubkolben-Motor nach einem der Ansprüche 1 bis 7, **dadurch gekennzeichnet**, daß der gegenseitige Versatz zwischen den Kreuzköpfen im Bereich eines zusammengehörenden Paars einander benachbarter Zylinder (5,6) zwischen 5% und 20% der Länge des Kreuzkopfzapfens, vorzugsweise 15%, beträgt.

## Revendications

1. Moteur à piston du type à crosse, en particulier moteur deux temps de grande taille, comportant des pistons reliés à chacun son maneton (10) d'un vilbrequin (11) par l'intermédiaire d'une tige de piston (7), d'une crosse (8; 8'; 108) et d'une bielle (9) et où la crosse comporte un tourillon de crosse (13; 13'; 113) ayant deux semelles de guidage (15; 15'; 115) situées aux extrémités opposées du tourillon et mobiles le long de plans de guidage (18; 18'; 118) supportés par un raidisseur vertical, transversal (19; 19'; 119) dans le carter (3) du moteur, caractérisé en ce que les cylindres du moteur sont disposés selon deux rangées parallèles, en ce que les bielles de deux cylindres voisins (5, 6), un de chaque rangée, sont articulées à rotation sur un maneton commun (10) du vilbrequin, et en ce que le tourillon de crosse (13; 13'; 113) et les plans de guidage (18; 18'; 118) sont conçus de telle manière que les paliers de crosse de la paire de cylindres voisins associés sont décalés l'un par rapport à l'autre dans le sens longitudinal du moteur si bien que les axes centraux de la tige de piston (7) et de la bielle (9) associés au même cylindre sont situés essentiellement dans un plan commun.

2. Moteur à piston selon la revendication 1, caractérisé en ce que le palier de crosse (12; 12') est disposé asymétriquement, dans le sens longitudinal du moteur, sur le tourillon de crosse (13; 13').

3. Moteur à piston selon la revendication 2, caractérisé en ce que les raidisseurs transversaux de support des plans de guidage dans le carter (3) du moteur, raidisseurs qui, de préférence, sont prévus sous la forme de plaques de paroi monocouche (19; 19'), sont chacun disposés dans le même plan transversal sur la largeur entière du moteur.

4. Moteur à piston selon les revendications 2 ou 3, caractérisé en ce que la largeur des faces de support (16') des semelles de guidage (15') les plus éloignées du palier de crosse (12') et, de préférence aussi, la largeur des faces de support (17') des plans associés de guidage (18') sont inférieures à la largeur des faces de support de la semelle de guidage, et de préférence aussi, à celle des plans de guidage à l'extrémité opposée du tourillon.

5. Moteur à piston selon la revendication 4, caractérisé en ce que le rapport entre les largeurs des faces de support (16', 17') situées à chacune des extrémités du tourillon de crosse (13') est inversement proportionnel à leur distance depuis le centre du palier de crosse (12').

6. Moteur à piston selon la revendication 1, caractérisé en ce que le palier de crosse (112) avec tourillon associé (113) et semelles de guidage (115) est essentiellement symétrique par rapport à un plan médian transversal à travers le palier de crosse, et en ce que les plans de guidage (118) de la paire associée de cylindres voisins sont décalés l'un par rapport à l'autre dans le sens longitudinal du moteur.

7. Moteur à piston selon la revendication 6, caractérisé en ce que les raidisseurs transversaux de support des plans de guidage dans le carter du moteur, raidisseurs qui, de préférence, sont prévus sous la forme de plaques de paroi monocouche, sont chacun disposés dans le même plan transversal sur la largeur entière du moteur (1), et en ce qu'un jeu de plans de guidage d'un tourillon de crosse est situé à une distance des raidisseurs transversaux associés plus importante que pour l'autre jeu.

8. Moteur à piston selon la revendication 6, caractérisé en ce que le raidisseur transversal (119) de support du plan de guidage, associé à l'un de deux cylindres voisins (5, 6) de la paire associée, est décalé dans le sens longitudinal du moteur par rapport au raidisseur transversal (119) associé à l'autre cylindre voisin, de préférence de telle manière que les deux jeux de plans de guidage pour un tourillon de crosse (113) sont mutuellement symétriques par rapport à un plan médian transversal à travers le palier de crosse.

9. Moteur à piston selon l'une quelconque des revendications 1 à 7, caractérisé en ce que le décalage entre les crosses de la paire associée de cylindres voisins (5, 6) va de 5 à 20 pour-cent de la longueur du tourillon de crosse, de préférence 15 pour-cent.
